# EUROPÄISCHE PATENTSCHRIFT

(11) **EP 2 016 109 B1**
(45) Veröffentlichungstag und Bekanntmachung des Hinweises auf die Patenterteilung: **27.10.2010**
(21) Anmeldenummer: 07724361.6
(22) Anmeldetag: 19.04.2007
(51) Int. Cl.: C08G 18/10, C08G 18/18, C08G 18/12, C08G 18/75

(54) **FEUCHTIGKEITSHÄRTENDE KLEB- UND DICHTSTOFFE**
MOISTURE-CURING ADHESIVES AND SEALANTS
MATÉRIAUX ADHÉSIFS ET D'ÉTANCHÉITÉ DURCISSANT À L'HUMIDITÉ

(30) Priorität: 02.05.2006 DE 102006020605
(43) Veröffentlichungstag der Anmeldung: 21.01.2009
(73) Patentinhaber: Bayer MaterialScience AG, 51368 Leverkusen (DE)
(72) Erfinder: WINTERMANTEL, Matthias, 51465 Bergisch Gladbach (DE); MECKEL, Walter, 40627 Düsseldorf (DE)
(86) Internationale Anmeldenummer: PCT/EP2007/003424
(87) Internationale Veröffentlichungsnummer: WO 2007/124868

(56) Entgegenhaltungen:
- EP-A- 1 595 902
- EP-A1- 0 472 278
- DE-A1- 4 129 936
- US-A- 4 511 626

## Beschreibung

Gegenstand der Erfindung sind unter dem Einfluß von Feuchtigkeit aushärtende Kleb- und Dichtstoffe mit guter Lagerfähigkeit, in weiten Grenzen einzustellender Verarbeitbarkeit und rascher Durchhärtung.

Feuchtehärtende isocyanatendständige Prepolymere auf Basis aromatischer Polyisocyanate wie beispielsweise TDI und vorzugsweise MDI werden abhängig von ihrem Isocyanatgehalt in weiten Bereichen der industriellen und Do-it-yourself (DIY)-Anwendung als Klebstoffe, Dichtstoffe und Beschichtungsstoffe eingesetzt.

Beispiele seien das Verkleben von Holz, die Herstellung von Sandwichkonstruktionen aus beispielsweise Holz- oder Aluminiumplatten mit Isoliermaterialien wie Steinwolle, EPS oder PUR-Hartschaumstoffen zu Isolierelementen wie sie im Containerbau eingesetzt werden, die Herstellung von Automobildachhimmelkonstruktionen aus einem thermoplastischen PUR-Schaum, einem Glasfaservlies und einem Dekorgewebe, wobei das NCO-Prepolymer die Schichten miteinander verklebt aber auch den Gesamtverbund zusätzlich verstärkt, oder auch die Verfestigung von lockeren Gesteinsformationen im StraBenbau. Bevorzugte NCO-Bereiche für dieses Marktsegment sind NCO-Gehalte von ca. 12 bis 18 Gew.-%.

NCO-terminierte Prepolymere mit NCO-Gehalten von ca. 6 bis 12 Gew.-% ergeben flexiblere Polyurethane nach der Aushärtung und sind demnach zur Herstellung von mehr flexiblen Verbundstoffen geeignet, wie beispielsweise der Herstellung von Gummigranulat Compounds als Bodenelemente für Kinderspielplätze.

Noch flexiblere Polyurethane werden mit Isocyanat terminierten Prepolymeren mit Isocyanatgehalten von 1 bis 5 Gew.-% erhalten, die beispielsweise einen großen Einsatz als Baudichtstoffe oder als Klebdichtstoffe in der Automobilindustrie zum Einkleben der Winschutzscheiben, etc. finden.

Eine neue Klasse von PUR Klebstoffen sind die reaktiven PUR Hotmelts, die bei Isocyanatgehalten von 2 bis 5 Gew.-%, abhängig vom verwendeten Polyol auch zu sehr steifen PUR führen können.

All diesen Prepolymeren ist gemeinsam, dass die Reaktion von Wasser mit Isocyanatgruppen unter Kettenverlängerung zu Polyhamstoffsegmenten führt, die den erhaltenen Polyurethanen eine hohe Festigkeit mit hervorragenden physikalischen Eigenschaften (wie Zähigkeit, Thermostabilität, etc.) verleihen.

Der wesentliche Vorteil der Prepolymere ist der, dass es sich um Einkomponentensysteme handelt, da die Reaktion mit Wasser sehr sicher abläuft und keine aufwendigen Stöchiometriebetrachtungen erfordert, wie sie bei Zweikomponentensystemen erforderlich sind. Die Reaktion führt immer, auch bei einem großen Überschuß an Wasser zu einem ausgehärteten Polyurethan. Als Reaktionspartner reicht normalerweise die vorhandene Luft- und/oder Substratfeuchtigkeit aus, es kann aber auch, insbesondere bei dichten Deckschichten wie beispielsweise Aluminiumprofilen mit Wasser benebelt werden.

Für den praktischen Einsatz wird durch Zugabe von Katalysatoren die offene Zeit der Systeme eingestellt. Unter der offenen Zeit versteht man die Zeit in der die Systeme nach Applikation auf die zu verklebenden Substrate noch gut verarbeitbar sind. Der Begriff "verarbeitbar" ist für jeden Einsatz neu zu definieren. Bei Klebstoffen ist die Verarbeitbarkeit im allgemeinen durch die Zeit definiert wie zwei Substrate noch problemlos gefügt werden können. Ist die Verarbeitungszeit überschritten sind die optimalen Eigenschaften wie beispielsweise eine Neupositionierung nicht mehr erreichbar.

Die Zeit, die vom Ende der Verarbeitungszeit bis zum Erreichen der optimalen Endeigenschaften notwendig ist, sollte möglichst kurz sein, denn übermäßig lange Wartezeiten bedeuten in der Praxis immer höhere Kosten, wie beispielsweise längere Verweilzeiten in der Presse, etc.

Die Länge der Verarbeitungszeit läßt sich in der Praxis durch Einsatz von Katalysatoren im Prinzip beliebig steuern, jedoch wird gleichzeitig durch alle Katalysatoren auch die Lagerfähigkeit der Systeme (ohne Wasserzutritt) negativ beeinflußt, so dass sehr schnell eingestellte Systeme auch eine begrenzte Lagerfähigkeit aufweisen, was die Logistik der Produkte beeinträchtigt. Die begrenzte Lagerfähigkeit zeigt sich vornehmlich in einem starken Anstieg der Viskosität , die bis zur Gelierung gehen kann. Auf der anderen Seite erlauben einige Katalysatoren zwar eine gute Steuerung der Verarbeitungszeit ergeben aber eine übermäßig lange Aushärtezeit der Systeme. Dies bedeutet in der Regel, dass die Teile zwischengelagert werden müssen ehe die weiterverarbeitet werden können.

Eine Übersicht von Katalysatoren findet sich beispielsweise bei A. Farkas und G.A. Mills, Adva. Catalysis, 13, 393 (1962), J.H. Saunders und K.C. Frisch, Polyurethanes, Part I, Wiey-Interscience, New York, 1962, Chap. VI, K.C. Frisch und L.P. Rumao, J. Macromol. Sci.-Revs. Macromol. Chem. , C5 (1), 103 - 150 (1970), oder G. Woods, The ICI Polyurethane Book, John Wiley & Sons, S. 41 - 45, 1987.

Gebräuchliche Katalysatoren sind die in der Polyurethanchemie bekannten Produkte, wie tert. aliphatische Amine und/oder Metallkatalysatoren.

So zeigen Metallkatalysatoren wie beispielsweise Dibutylzinndilaurat eine hervorragende Beschleunigung der Wasserreaktion mit Isocyanatgruppen enthaltenden Prepolymeren verbunden auch mit einer guten Durchhärtung, jedoch wird im gleichen Maße auch die Lagerfähigkeit negativ beeinflußt. Eine Verbesserung wird zwar in der EP-A 0 132 675 durch die "Blockierung" des Katalysators durch Zugabe von Tosylisocyanat erreicht, jedoch reichen geringste Feuchtigkeitsspuren bereits aus, diese Blockierung aufzuheben, was in Summe zwar in einer verbesserten aber immer noch unzureichenden Lagerfähigkeit resultiert.

Meist wird in der Praxis eine Mischung verschiedener Katalysatoren eingesetzt, um die Kombination aller Eigenschaften weitestgehend zu erreichen.

Ein genereller Nachteil der Prepolymere auf Basis aromatischer Polyisocyanate ist die Neigung der Endprodukte zu einer starken Verfärbung unter Lichteinfluß, die für viele Anwendungen prohibitiv ist. Ein allgemein anerkanntes Prinzip diesen Nachteil zu Eliminieren ist die Verwendung von geeigneten Additiven, wie beispielsweise Kombinationen von sterisch gehinderten Phenolen und sterisch gehinderten aliphatischen Aminen ("HALS-Typen"), die jedoch nur eine graduelle Verbesserung darstellen. Eine grundsätzliche Verbesserung stellt die Verwendung von aliphatischen Polyisocyanaten, wie beispielsweise Hexamethylendiisocyanat, Isophorondiisocyanat oder 4,4'-Diisocyanato-dicyclohexylmethan in Form seiner sterischen Isomerengemische oder vorstehende Disisocyanate in Form ihrer Derivate dar.

Bei diesen Polyisocyanaten zeigt sich aber, dass im Gegensatz zu den aromatischen Polyisocyanaten die Reaktion mit Wasser nur sehr träge abläuft.

Man benötigt sehr hohe Konzentrationen an Metallkatalysatoren wie beispielsweise Dibutylzinndilaurat oder Wismutsalzen, um die Reaktion überhaupt zu katalysieren. Katalysatorkonzentrationen in dieser Höhe wirken sich aber immer negativ auf die Langzeitgebrauchseigenschaften, wie beispielsweise die Hydrolysenbeständigkeit von beispielsweise Polyester basierten Klebstoffen aus. Die bei den Klebstoffen auf Basis aromatischer Polyisocyanate als Katalysatoren sehr gebräuchlichen tert. aliphatischen Amine, wie beispielsweise 1,4-Diazabicyclooctan oder Dimorpholinodieethylether erweisen sich ebenfalls als wenig katalytisch wirksam, vgl. L. Havenith in Paint Manufacture, Dezember 1968, S. 33 - 38, insbesondere S. 34.

Ebenfalls diskutiert werden in der Literatur technisch sehr aufwendige Verfahren, in denen die zu härtenden Systeme, vornehmlich Beschichtungen in dünner Schicht in Kammern mit Feuchtigkeit in Anwesenheit von leichtflüchtigen tert. aliphatischen Aminen, wie beispielsweise Trimethylamin, und eventuell erhöhter Temperatur gehärtet werden. Da durch diese Vorgehensweise sehr hohe Katalysatorkonzentrationen verwendet werden können, ohne dass diese im Produkt verbleiben, bestehen die vorstehend beschriebenen Probleme nicht.

Gesucht werden also Katalysatoren die bei guter Steuerung der Verarbeitungszeit die Lagerfähigkeit der Systeme nur in geringem Maße beeinträchtigen und gleichzeitig eine schnelle Durchhärtung ermöglichen.

Gegenstand der vorliegenden Erfindung sind somit Kleb- und/oder Dichtstoffe basierend auf Isocyanatgruppen enthaltenden Prepolymeren auf Basis aliphatischer Polyisocyanate mit Isocyanatgehalten von 1 bis 20 Gew.-%, **dadurch gekennzeichnet, dass** als Katalysator Bis(dimethylaminoethyl)ether als Katalysator alleine oder neben anderen Katalysatoren mitverwendet wird.

Bis(dimethylaminoethyl)ether zeigt als Katalysator überraschend ein ausgewogenes Verhältnis von Verarbeitungszeit zu Durchhärtezeit bei einem nur geringem Einfluß auf die Thermostabilität der Isocyanatgruppen terminierten Prepolymere auf Basis aliphatischer Polyisocyanate. Der Katalysator ist nicht neu und wird in der Literatur als guter Katalysator mit besonderer Beschleunigung der Schaumreaktion (Blaskatalysator) beschrieben. Der Einsatz im Marktsegment CASE (Coatings, Addhesives, Sealants, Elastomers) wird in den Druckschriften der Firmen als nicht optimal angesehen, vgl. Beschreibung von DABCO BL -11 (Mischung von 70 Gew.-% Bis(dimethylaminoethyl)ether und 30 Gew.-% Dipropylenglykol ) in Air Products-Polyurethanes Additives, European Product Reference Guide - Suggested Applications, GI - 03/96-2000 G/UK-LB1609, oder auch JEFFCAT ZF 20 (100 %-ige Ware), bzw. JEFFCAT ZF 22 (70 %-ig in Dipropylenglykol) in JEFFCAT Catalysts for the Polyurethane Industry, Huntsman, 2000. Ein Hinweis auf seine Wirksamkeit in Verbindung mit aliphatischen Polyisocyanaten ist nicht gegeben.

Als NCO-terminierte Prepolymere mit Isocyanatgehalten von 1 bis 20 Gew.-%, vorzugsweise 2 bis 16 Gew.-% sind Umsetzungsprodukte von aliphatischen Polyisocyanaten mit Hydroxylpolyestern und/oder Hydroxylpolyethern zu verstehen, die als solche oder formuliert mit Weichmachern, Füllstoffen, Rheologiehilfsmitten über die Reaktion mit Luft- und/oder Substratfeuchtigkeit zu hochmolekularen Polyurethanpolyharnstoffen aushärten.

Unter den in Frage kommenden aliphatischen Polyisocyanaten sind insbesondere Hexamethylendiisocyanat, Isophorondiisocyanat und 4,4'-Diisocyanato-dicyclohexylmethan in Form seiner sterischen Isomerengemische zu verstehen. Mit eingeschlossen sind selbstverständlich auch die Verwendung, bzw. Mitverwendung der vorstehend erwähnten Disisocyanate in Form ihrer Derivate, wie beispielsweise Biurete, Allophanate, Uretdione und Trimerisate und Mischformen dieser Derivatisierungen.

Geeignet als Hydroxylverbindung sind. Insbesondere die Polypropylenetherpolyole, die über Doppelnetallkatalysatoren erhältlich sind, und den Aufbau von sehr hochmolekularen gut definierten Polyetherpolyolen mit Molekulargewichten bis zu 25000 ermöglichen. Möglich sind selbstverständlich auch die Polyetherpolyole mit darin dispergierten organische Füllstoffen wie beispielsweise Additionsprodukten von Toluylendiisocyanat mit Hydrazinhydrat oder Copolymerisaten von Styrol und Acrylnitril.

Einsetzbar sind auch die durch Polymerisation von Tetrahydrofuran erhältlichen Polytetramethylenetherglykole mit Molekuargewichten von 400 bis 4000, aber auch Hydroxylgruppen enthaltende Polybutadiene.

Es können selbstverständlich auch Mischungen der erwähnten Polyole in Mischung mit niedermolekularen Polyolen wie beispielsweise Ethylenglykol, Butandiol, Diethylenglykol oder Butendiol-1,4 eingesetzt werden.

Die vorstehend erwähnten Polyole können selbstverständlich mit allen Polyisocyanaten, aromatischen als auch alipatischen vor der eigentlichen Prepolymerisierung zu Urethan modifizierten Hydroxylverbindungen umgesetzt werden.

Die Herstellung der Isocyanat-terminierten Prepolymere erfolgt nach bekannten Methoden indem die Polyole mit einem stöchiometrischen Überschuß von aliphatischen Polyisocyanaten bei Temperaturen von 30 bis 150°C, vorzugsweise 60 bis 140°C zur Reaktion gebracht werden. Dies kann diskontinuierlich in Kesseln oder kontinuierlich in Kesselkaskaden oder über Mischer erfolgen.

Besonders bevorzugt ist, dass die Hydroxylverbindungen mit einem hohen Überschuß an Disiocyanaten umsgesetzt werden und dass das noch vorhandene monomere Disocyanat nach bekannten Techniken, wie beispielsweise über einen Dünnschichtverdampfer bei erhöhter Temperatur und vermindertem Druck dem Prepolymer entzogen wird. Man erhält auf diese Weise Prepolymere mit niedrigem Monomergehalt, die abhängig vom Restmonomergehalt zum Teil nicht mehr kennzeichnungspflichtig sind.

All diesen Produkten kann vor während oder bevorzugt nach der Reaktion noch modifizierte aliphatische Polyisocyanate zur Feinsteurerung der Eigenschaften zugesetzt werden. Solche Produkte befinden sich im Handel, wie beispielsweise unter den Namen Desmodur^{®} N 100 (HDI-Biuretmodifizierung) oder Desmodur^{®} N 3300 (HDI-Trimerisierung) der Bayer AG oder Vestanat^{®} (IPDI-Trimersisat).

Je nach zu erwartender Endviskosität, die - abhängig von der Formulierung zwischen niedigviskos bis hochviskos variieren kann - kommen verschiedene Aggregate in Betracht.

Der Katalysator Bis(dimethylaminoethyl)ether wird den Prepolymeren vor, während oder vorzugsweise nach der Beendigung der Prepolymerbildung zugesetzt.

Die zugesetzte Menge dieses Katalysators richtet sich nach der gewünschten Verarbeitungszeit. In der Regel reichen Mengen von 0,02 bis 3,0 Gew.-%, vorzugsweise 0,1 bis 2,0 Gew.-%, besonders bevorzugt 0,5 bis 1,5 Gew.-%, bezogen auf das Prepolymer, aus.

Den Prepolymeren können zusätzlich Lösungsmittel, Füllstoffe, Farbstoffe und Rheologiehilfsmittel zugesetzt werden wie sie in der Praxis bekannt sind.

Als Füllstoffe seien beispielhaft Kreide, Schwerspat, aber auch faserförmige Füllstoffe wie Polyamid- oder Polyacrylnitrilfasern erwähnt. Unter den Rheologiehilfsmitteln seien neben den industrieüblichen Zusätzen wie Aerosilen, Bentoniten oder hydriertem Rizinusöl auch niedermolekulare Amine genannt, die in Kombination mit Polyisocyanaten sehr rasche eine Strukturviskosität aufbauen. Bei all diesen Zusätzen ist auf unbedingten Ausschluß von Feuchtigkeit zu achten, da dadurch eine vorzeitige Reaktion im Gebinde eintreten würde.

Der Auftrag der Kleb-, Dichtstoffe erfolgt beispielsweise durch Rakeln Sprühen, Pinseln oder auch in kompakterer Form in Form einer Raupe.

Eine gute Methode zur Beurteilung der unterschiedlichen Aushärtephasen von solchen Systemen ist beispielsweise mit Hilfe von käuflichen Geräten, wie beispielsweise Drying Recorder BK 10 (The Mickle Laboratory Engeneering Co. Ltd.) möglich, die in der Lack-, Klebstoff- und Dichtstoffindustrie weit verbreitet sind. Hierbei wird eine nötigenfalls mit einem Gewicht belastete Nadel mit konstanter Geschwindigkeit durch einen dünnen Film des zu begutachtenden Prepolymers auf einem Träger (z.B. Glasplatte) geführt. Man beobachtet drei Phasen, die definitionsgemäß mit den Begriffen "Verarbeitungszeit" und "Durchhärtezeit" bezeichnet werden.

Zu Anfang läuft die Nadel durch den flüssigen Film und die Spur der Nadel verläuft mehr oder weniger vollständig, was mit der Verarbeitungszeit zu korrelieren ist. Das Ende der Verarbeitungszeit, auch als Hautbildungszeit, offene Zeit oder Kontaktklebrigkeitszeit bezeichnet, wird durch das erste Auftreten einer permanenten Spur der Nadel angezeigt.

Nun folgt eine mehr oder weniger lange Strecke (entsprechend vergangener Zeit), bei der die Nadel eine Spur hinterläßt. Wenn der Film genügend durchgehärtet ist, ist die Nadel nicht mehr in der Lage den Polymerfilm zu durchdringen, die Nadel läuft spurenfrei über den Polymerfilm, was meßtechnisch als Durchhärtezeit zu bezeichnen ist. Der Beginn dieses Zustandes hängt meßtechnisch selbstverständlich neben der generellen Zusammensetzung des Klebstoffs mit dem Gewicht zusammen, mit dem die Nadel belastet wird und kann somit nicht gleichbedeutend mit der Zeit sein, in der das Polymer seine Endeigenschaften erreicht hat. Der Zeitpunkt korreliert aber recht gut mit Begriffen wie beispielsweise Erreichen der "Handfestigkeit", "Knickfestigkeit", etc.

Der Praktiker wünscht sich die Zeitspanne zwischen dem Ende der Verarbeitungszeit und dem Erreichen der Durchhärtezeit möglichst kurz.

Die Verkürzung dieser Zeitspanne bei möglichst beliebiger Verarbeitungszeit und möglichst unbeeinträchtigter Lagerfähigkeit von NCO-terminierten Prepolymeren ist Gegenstand der Erfindung.

Gegenstand der Erfindung ist auch die Verwendung so katalysierter Prepolymere als Klebstoffe und/oder Dichtstoffe, bei denen es auf die Aushärtung der aliphatischen Isocyanatgruppen mit Feuchtigkeit ankommt. Mögliche Anwendungen unter anderem sind das Kleben von Holzkörpern, wie beispielsweise Keilzinken, Brettschichthölzern oder Balken. Ebenso sind die Verklebung von Holzspänen, Holzfasern oder Holzmehl zu Platten oder Formkörpern möglich. Bei diesen Anwendungen sind Prepolymere mit Isocyanatgehalten von ca. 10 bis 20 % besonders geeignet. Niedrigere Isocyanatgehalte sind mehr für niedermodulige Polymere geeignet, wie beispielsweise für den Einsatz von nichtverfärbenden hellen Fugendichtstoffen oder für den Bereich der reaktiven PUR-Hotmelts geeignet, bei denen ein solches Prepolymer bei Temperaturen von oberhalb 80°C appliziert wird und beim Abkühlen Festigkeit auf Grund physikalischer Vorgänge aufbaut und die Endreaktion mit Feuchtigkeit (vgl. EP-A 0 354 527) erfolgt.

Mit den erfindungsgemäßen Klebstoffe und/oder Dichtstoffen gefügte bzw. gedichtete Substrate sind daher auch Gegenstand der vorliegenden Erfindung.

Die nachfolgenden Beispiele sollen die Erfindung erläutern.

### Beispiele:

### Experimenteller Teil:

### Beispiel 1

### Prepolymerherstellung (HDI)

1000 g (4,587 Mol) Polypropylenglykol mit einer Hydroxylzahl von 515 mg KOH/g und 3850 g (22,94 Mol) Hexamethylendiisocyanat werden bei ca. 80 bis 90°C umgesetzt.

Das Prepolymer zeigt am Ende der Reaktionszeit von 6 Stunden einen konstanten NCO-Wert von 31,5 %. Das Prepolymer wird dann bei 160°C und 0,1 mm Hg über einen Kurzwegverdampfer weitgehend vom überschüssigen Monomeren befreit.

Man erhält ein mittelviskoses Prepolymer mit einem Isocyanatgehalt von 12,5 % und einer Viskosität von 4500 mPas bei 23°C. Der Restmonomergehalt beträgt 0,35 %.

### Beispiel 2 (Vergleichsbeispiel)

### Prepolymerherstellung (IPDI)

1000 g (1,0 Mol) Polyesterpolyol auf Basis Diethylenglykol und Adipinsäure mit einer Hydroxylzahl von 112 mg KOH/g und einer Säurezahl von 10,9 mg KOH/g und 888 g (4,0 Mol) Isophorondiisocyanat werden bei ca. 100°C umgesetzt.

Das Prepolymer zeigt am Ende der Reaktionszeit von 9 Stunden einen konstanten NCO-Wert von 13,2 %. Das Prepolymer wird dann bei 180°C und 0,1 mm Hg über einen Kurzwegverdampfer weitgehend vom überschüssigen Monomeren befreit.

Man erhält ein hochviskoses Prepolymer mit einem Isocyanatgehalt von 5,8 % und einer Viskosität von 6000 mPas bei 50°C. Der Restmonomergehalt beträgt 0,25 %.

### Beispiel 3

### Untersuchung am Drying Recorder (Versuchsbeschreibung)

Mittels eines Rakels (250 µm) wird ein Film auf eine vorher mit Ethylacetat gereinigte Glasplatte aufgetragen und sofort in den Drying Recorder eingelegt. Die Nadel wird mit 10 g belastet und bewegt sich über eine Zeitraum von 360 Minuten über eine Strecke von 35 cm.

Der Drying Recorder befindet sich in einem Klimaraum bei 23°C und 50 % rel. Luftfeuchte.

100 g des Prepolymeren aus Beispiel 1 werden mit verschiedenen handelsüblichen Katalysatoren so gemischt, dass sich mit dem Drying Recorder eine Verarbeitungszeit (sichtbares Auftreten einer permanenten Spur der Nadel im Film) von ca. 25 bis 60 Minuten ergibt.

Die Durchhärtezeit wird mit dem Zeitpunkt des Verschwindens der permanenten Spur der Nadel aus dem Film angegeben.

| **Beispiel 3** | **Katalysator** | **Menge** **(Gew.-%)** | **Viskosität nach 4 h (mPas) bei 23°C** | **Verarbeitungszeit (min)** | **Durchhärtezeit (min)** |
|---|---|---|---|---|---|
| A | keiner | | 4500 | >360 | >360 |
| B | N,N-Dimethylethanolamin | 1,2 | 5500 | 40 | 53 |
| C | Coscat^{®} 83 | 2,5 | 5000 | 58 | 107 |
| D | DABCO NE 1060 | 0,75 | 5500 | 39 | 54 |
| E | DABCO 33 LV | 4,5 | 8000 | 300 | >360 |
| F | DABCO DMDEE | 2,0 | 4800 | 245 | 320 |
| G | DBTL | 1,0 | 6000 | 160 | 318 |
| H | Bis(dimethylaminoethyl)ether | 0,5 | 4700 | 39 | 53 |
| I | Bis(dimethylaminoethyl)ether | 1,0 | 4900 | 24 | 36 |

| | | | | | |
|---|---|---|---|---|---|
| Legende: Coscat^{®} 83 Neodecansäure-Bismuth(3+)salz (Versatic acid Bismuth(3+)salt) DABCO NE 1060 N-Dimethylaminopropylharnstoff DABCO 33 LV Triethylendiamin 70 %-ig in Dipropylenglykol DABCO DMDEE Dimorpholinodiethylether DBTL Dibutylzinndilaurat | | | | | |

Wie man der Tabelle entnehmen kann werden nur mit den aminischen Katalysatoren (Beispiel 3 B, 3 C und 3 H, bzw. 3 I) bei Dosierungen von 1 Gew.-% und weniger stark verkürzte Verarbeitungszeiten sicher erreicht.

### Beispiel 4

Mit den Katalysatoren Beispiel 3 B, 3 C und 3 H wurden Langzeitlagertests bei 60°C in ALU-Flaschen durchgeführt.

Die NCO-Werte, Viskosität bei 50°C Verarbeitungszeit wurden bestimmt.

| **Beispiel** | **Rezeptur aus Beispiel** | **NCO-Gehalt** **(%) nach Tagen** **0/7/14/28** | **Viskosität(mPas) nach Tagen bei 50°C** **0/7/14/28** | **Verarbeitangszeit nach Tagen** **7/14/28** | **Durchhärtezeit nach Tagen** **7/14/28** |
|---|---|---|---|---|---|
| A | 0-Wert 3 A | 12,46/12,36/12,39/12,39 | 500/540/570/620 | >360 | >360 |
| B | 3 B | 11,61 | 600/geliert/geliert | 28/25/24 | 65/70/60 |
| C | 3 C | 11,98/11,12 | 530/900 | 50/170 | >360 |
| D | 3 H | 12,09/11,13/11,12/11,09 | 465/780/850/930 | 52/40/45/45 | 71/53/60/61 |

Versuch 4 B wurde wegen mangelnder Lagerstabilität (Gelierung nach 1 Woche) vorzeitig abgebrochen.

Versuch 4 C wurde wegen mangelnder Stabilität des Katalysators (zunehmende Desaktivierung) vorzeitig abgebrochen.

Die Vorteile des erfindungsgemäßen Katalysators Bis(dimethylaminoethyl)ethers treten klar hervor (Beispiel 4 D). Man beobachtet zwar eine leichte Beeinträchtigung der Lagerstabilität gegenüber dem unkatalysierten Prepolymeren, aber der Abfall im NCO-Wert, bzw. Anstieg der Viskosität über eine Lagerzeit von 112 Tagen (4 Wochen) bei 60°C ist in Anbetracht der enormen Beschleunigung der Wasserreaktion ist zu tolerieren.

### Beispiel 5

561 g Prepolymer aus Beispiel 1 wurde mit 339 g Desmodur^{®} N 3300 der Bayer AG (Trimerisat von Hexamethylendiisocyanat mit 21,8 % NCO-Gehalt und 0,1 % freiem HDI-Monomer) und 100 g Kreide (Omya Kreide) gemischt. Es ergibt sich eine Klebstoffmischung mit ca. 14,5 % NCO-Gehalt. Der Klebstoff wird ohne und mit 0,45 % Gew.-% Bis(dimethylamonethyl)ether als Klebstoff für Buchenholzprüfkörper (spaltfrei) geprüft.

Hierzu wurde das Prepolymer einseitig aufgestrichen und die Prüfkörper (50x20x5 mm) für 10x20 mm überlappend in der Presse mit 5 Bar bei 23 °C und 50 % rel. Feuchte gehalten. Anschließend wurde im Zugscherversuch die Klebkraft gemessen (jeweils 10 Prüfkörper).

Man erhält das folgende Ergebnis:

| **Prüfung nach** | **Klebstoff unkatalysiert** | | **Klebstoff katalysiert** | |
|---|---|---|---|---|
| | **Zugfestigkeit** **(N/mm²)** | **Standardabweichung** | **Zugfestigkeit** **(N/mm²)** | **Standardabweichung** |
| 1 h | - | | 7,9 | 1,2 |
| 2 h | - | - | 9,2 | 1,9 |
| 3 h | - | - | 10,2 | 1,2 |
| 4 h | - | - | 11,6 | 0,8 |
| 5 h | - | - | 9,3 | 0,6 |
| 6 h | - | - | 9,0 | 0,4 |
| 24 h | - | - | 9,2 | 0,6 |
| 48 h | - | - | 8,0 | 2,5 |
| 72 h | 7,2 | 0,7 | 9,5 | 0,6 |
| 7 Tage | 11,8 | 0,9 | 9,6 | 1,5 |
| 14 Tage | 12,0 | 0,9 | 9,6 | 1,1 |

Die erfindungsgemäß katalysierten Klebstoffe geben nach kurzer Zeit bereits gute Verbundfestigkeiten.

Parallel wurden 1 mm dicke Filme auf Kartonpapier für 7 Wochen intensivem Sonnenlicht ausgesetzt.

Man beobachetet für den unkatalysierten Film einen Yellowness-Index (gemessen mit dem Farb-Differenz-Meßgerät "Micro Color" von Dr. Lange, Gerätenummer LMG 051/052) von 5,5 und für die katalysierte Variante einen Yellowness-Index von 6,8.

Ergebnis: keine drastische Farbvertiefung wie es bisweilen mit tert. aliphatischen Aminkatalysatoren beobachtet wird.

### Beispiel 6 (Vergleichsbeispiel)

100 g des Prepolymeren aus Beispiel 2 werden mit verschiedenen handelsüblichen Katalysatoren so gemischt, dass sich mit dem Drying Recorder eine Verarbeitungszeit (sichtbares Auftreten einer permanenten Spur der Nadel im Film) von ca. 25 bis 60 Minuten ergibt.

Die Durchhärtezeit wird mit dem Zeitpunkt des Verschwindens der permanenten Spur der Nadel aus dem Film angegeben.

| **Beispiel 6** | **Katalysator** | **Menge** **(Gew.-%)** | **Verarbeitungszeit (min)** | **Durchhärtezeit (min)** |
|---|---|---|---|---|
| A | keiner | | >360 | >360 |
| B | N,N-Dimethylethanolamin | 1,2 | 40 | 53 |
| C | Coscat^{®} 83 | 2,5 | >350 | >350 |
| D | DABCO NE 1060 | 0,75 | 39 | 73 |
| E | DABCO DMDEE | 2,0 | >345 | >350 |
| F | DBTL | 1,5 | >350 | >350 |
| G | Bis(dimethylaminoethyl)ether | 0,5 | 84 | >350 |
| H | Bis(dimethylaminoethyl)ether | 0,75 | 59 | 83 |

| | | | | |
|---|---|---|---|---|
| Legende: Coscat^{®} 83 Neodecansäure-Bismuth(3+)salz (Versatic acid Bismuth(3+)salt) DABCO NE 1060 N-Dimethylaminopropylharnstoff DABCO DMDEE Dimorpholinodiethylether DBTL Dibutylzinndilaurat | | | | |

Wie man der Tabelle entnehmen kann werden nur mit den aminischen Katalysatoren (Beispiel 6 D und 6 G, bzw. 6 H ) bei Dosierungen von 1 Gew.-% und weniger stark verkürzte Verarbeitungszeiten sicher erreicht.

### Beispiel 7

Mit den Mischungen (Nullprobe Beispiel 2; Mischung Beispiel 6 D und Beispiel 6 H) werden Lagestabilitätstests bei 60°C in Aluminium-Kartuschen gemacht

Die NCO-Werte, Viskosität bei 50°C Verarbeitungszeit wurden bestimmt.

| **Beispiel** | **Rezeptur aus Beispiel** | **NCO-Gehalt (%) nach Tagen** **0/7/14/28** | **Viskosität(mPas) bei 50°C nach Tagen** **0/7/14/28** | **Verarbeitungszeit nach Tagen** **7/14/28** | **Durchhärtezeit nach Tagen** **7/14/28** |
|---|---|---|---|---|---|
| A | 0-Wert | 5,34/5,30/5,27/5,26 | 5370/5590/5560/5800 | >360 | >360 |
| B | 6 B | 5,25/ | 6200/ | | |
| C | 6 D | 5,07/4,72/4,66/4,62 | 5400/7600/8100/9300 | 55/>350 | >360 |
| D | 6 H | 5,04/4,93/4,90/4,89 | 5200/5600/5600/5700 | 52/40/53/33 | 105/95/120/95 |

Versuch 7 B wurde wegen mangelnder Lagerstabilität (Gelierung nach 1 Woche) vorzeitig abgebrochen.

Versuch 7 C wurde wegen mangelnder Stabilität des Katalysators (zunehmende Desaktivierung) vorzeitig abgebrochen.

Die Vorteile des erfindungsgemäßen Katalysators Bis(dimethylaminoethyl)ethers treten klar hervor (Beispiel 7 D). Man beobachtet eine gegenüber der Nullprobe fast identische Lagerstabilität. Die Verarbeitugszeit läßt sich drastisch verkürzen.

### Beispiel 8 (Vergleichsbeispiel)

4000 g eines Hexandioladipats (Baycoll^{®} AD 5027 der Bayer AG) mit einer Hydroxylzahl von 28 mg KOH/g (1,0 Mol) werden bei 120°C für 60 Minuten im Vakuum entwässert. Bei 120°C werden 399,6 g (1,8 Mol) 3,5,5-Trimethyl-3isocyanatomethylen-cyclohexylisocyanat (Desmodur^{®} I der Bayer AG) zugegeben.

Nach 60 Minuten wird in Kartuschen abgefüllt und anschließend bei 100°C getempert.

Die Lagerstabilität wird nach 4, 24, 48 und 72 Stunden bei 100°C getestet.

### Beispiel 8A (Vergleichsbeispiel)

4000 g eines Hexandioladipats (Baycoll^{®} AD 5027) mit einer Hydroxylzahl von 28 mg KOH/g (1,0 Mol) werden bei 120°C für 60 Minuten im Vakuum entwässert. Bei 120°C werden 399,6 g (1,8 Mol) 3,5,5-Trimethyl-3isocyanatomethylen-cyclohexylisocyanat (Desmodur^{®} I der Bayer AG) zugegeben.

Nach 60 Minuten werden 1,8 g (0,5 Gew.-%) Bis(dimethylaminoethyl)ether zugegeben und homogenisiert.

Nach 30 Minuten wird in Kartuschen abgefüllt und anschließend bei 100°C getempert.

Die Lagerstabilität wird nach 4, 24, 48 und 72 Stunden bei 100°C getestet.

| **Prepolymer** | **Lagerung nach 4 h NCO-Wert (%) / Viskosität (mPas) bei 100°C/130°C** | **Lagerung nach 24 h NCO-Wert (%) / Viskosität (mPas) bei 100°C/130°C** | **Lagerung nach 48 h NCO-Wert (%) / Viskosität (mPas) bei 100°C/130°C** | **Lagerung nach 72 h NCO-Wert (%) / Viskosität (mPas) bei 100°C/130°C** |
|---|---|---|---|---|
| 8 | 1,56/10300/3500 | 1,50/12000/3800 | 1,45/13000/4000 | 1,40/14000/4200 |
| 8 A | 1,28/14000/4400 | 1,30/14400/4500 | 1,26/15000/5000 | 1,24/16000/5300 |

Die Aushärtecharakteristik wird an Hand des "Knicktests" bestimmt. Hierzu wird ein 0,1 mm dicker Prepolymerfilm auf eine Glasplatte gerakelt, das erstarrte Prepolymer nach bestimmten Zeiten (bei 23°C und 50 rel. Luftfeuchte) einem Knicktest unterzogen, indem der Polymerfilm um 180° geknickt wird. Nur ein weitgehend reagiertes Polymer wird den Test überstehen. Nicht reagierte Polymere brechen, da noch kein genügend hohes Molekulargewicht aufgebaut ist.

| **Zeit nach Aufrakeln** | **Prepolymer 8** | **Prepolymer 8 A** |
|---|---|---|
| 2 Stunden | Bruch | Bruch |
| 4 Stunden | Bruch | Bruch |
| 6 Stunden | Bruch | Knickfest |
| 24 Stunden | Bruch | Knickfest |
| 48 Stunden | Bruch | Knickfest |
| 96 Stunden | Bruch | Knickfest |

Auch für den Bereich der reaktiven PUR-Hotmelts zeigt der erfmdungsgemäße Katalysator Bis(dimethylaminoethyl)ether eine gegenüber dem unkatalysierten System nur unwesentlich verschlechterte Lagerfähigkeit bei einer bedeutend rascheren Aushärtung.

### Klebversuche

Der auf 130°C aufgeheizte Klebstoff wird mit einem Rakel auf Buchenholzprüfkörper aufgetragen und mit einer PVC-Folie sofort verklebt.

Im Schältest wird die Festigkeit ermittelt.

| **Lagerzeit der Prüfkörper in Stunden** | **Klebstoff nach Beispiel 8 Schälfestigkeit (N/mm)** | **Klebstoff nach Beispiel 8A Schälfestigkeit (N/mm)** |
|---|---|---|
| 1 | 0,04 | 0,1 |
| 2 | 0,03 | 3,4 |
| 24 | 0,05 | 4,2 |
| 168 | 1,4 | 6,5 |
| 336 | 6,1 | 7,2 |

Der auf 130°C aufgeheizte Klebstoff wird auf Buchenholzprüfkörper einseitig aufgetragen und sofort mit einem anderen Buchenholzprüfkörper verklebt und im Zugscherversuch gerissen.

| **Lagerzeit der Prüfkörper in Stunden** | **Klebstoff nach Beispiel 8 Festigkeit (N/mm2)** | | **Klebstoff nach Beispiel 8A Festigkeit (N/mm2)** | |
|---|---|---|---|---|
| 1 | 3,3 | 100 % A | 5,4 | 90%A 10%K |
| 2 | 3,4 | 100%A | 7,7 | 10%F 50%A 40%K |
| 24 | 3,2 | 100 % A | 10,7 | 20 % F 80 % A |
| 168 | 5,7 | 60%A 40%K | 10,8 | 40%F 60%A |
| 336 | 7,9 | 20%A 80%K | 11,0 | 30%F 70%A |

## Patentansprüche

1. Feuchtigkeitshärtende Kleb- und Dichtstoffe bestehend aus Isocyanatgruppen enthaltenden Prepolymeren mit Isocyanatgehalten von 2 bis 20 Gew.-% auf Basis aliphatischer Polyisocyanate und über Doppelmetallkatalysatoren erhältlicher Polypropylenpolyetherpolyole mit Molekulargewichten bis zu 25000, sowie gegebenenfalls Lösungsmitteln, Füllstoffen, Farbstoffen und Rheologiehilfsmitteln, **dadurch gekennzeichnet, dass** als Katalysator Bis(dimethylaminoethyl)ether verwendet wird.

2. Kleb- und Dichtstoffe nach Anspruch 1, **dadurch gekennzeichnet, dass** der Katalysator in einer Menge von 0,02 bis 3,0 Gew.-%, bezogen auf das Prepolymere, eingesetzt wird.

3. Kleb- und Dichtstoffe nach Anspruch 1, **dadurch gekennzeichnet, dass** der Katalysator in einer Menge von 0,5 bis 1,5 Gew.-%, bezogen auf das Prepolymere, eingesetzt wird.

4. Kleb- und Dichtstoffe nach Ansprüchen 1 bis 3, **dadurch gekennzeichnet, dass** der Isocyanatgruppengehalt 3 bis 17 Gew.-% beträgt.

5. Kleb- und Dichtstoffe nach Ansprüchen 1 bis 4, **dadurch gekennzeichnet, dass** als aliphatisches Polyisocyanat Hexamethylendiisocyanat als monomeres Diisocyanat und/oder in Form seiner Derivate eingesetzt wird.

6. Kleb- und Dichtstoffe nach Ansprüchen 1 bis 4, **dadurch gekennzeichnet, dass** Isophorondiisocyanat als Isocyanat und/oder in Form seiner Derivate eingesetzt wird.

7. Kleb- und Dichtstoffe nach Ansprüchen 1 bis 6, **dadurch gekennzeichnet, dass** die sie einen Gehalt an monomeren Diisocyanaten von kleiner 1,0 % -Gew. aufweisen.

8. Verwendung der Kleb- und Dichtstoffe der Ansprüchen 1 bis 7 als in der Hitze applizierbare, beim Abkühlen Festigkeit aufbauende und dann mit Feuchtigkeit reagierende reaktive Polyurethanhotmeltsysteme.

9. Mit Klebstoffe und Dichtstoffen gemäß Ansprüchen 1 bis 7 verklebte bzw. gedichtete Substrate.

## Claims

1. Moisture-curing adhesives and sealants composed of prepolymers containing isocyanate groups and having isocyanate contents of 2% to 20% by weight on the basis of aliphatic polyisocyanates, and polypropylene polyether polyols obtainable via double-metal catalysts and having molecular weights of up to 25 000, and also, optionally, solvents, fillers, dyes and rheological assistants, **characterized in that** bis(dimethylaminoethyl) ether is used as catalyst.

2. Adhesives and sealants according to Claim 1, **characterized in that** the catalyst is used in an amount of 0.02% to 3.0% by weight, based on the prepolymer.

3. Adhesives and sealants according to Claim 1, **characterized in that** the catalyst is used in an amount of 0.5% to 1.5% by weight, based on the prepolymer.

4. Adhesives and sealants according to Claims 1 to 3, **characterized in that** the isocyanate group content is 3% to 17% by weight.

5. Adhesives and sealants according to Claims 1 to 4, **characterized in that** hexamethylene diisocyanate, as monomeric diisocyanate and/or in the form of its derivatives, is used as aliphatic polyisocyanate.

6. Adhesives and sealants according to Claims 1 to 4, **characterized in that** isophorone diisocyanate, as isocyanate and/or in the form of its derivatives, is used.

7. Adhesives and sealants according to Claims 1 to 6, **characterized in that** they have a monomeric diisocyanate content of less than 1.0% by weight.

8. Use of the adhesives and sealants of Claims 1 to 7 as reactive polyurethane hotmelt systems which can be applied hot, develop strength on cooling and then react with moisture.

9. Substrates bonded and/or sealed with adhesives and sealants according to Claims 1 to 7.

## Revendications

1. Adhésifs et matériaux d'étanchéité durcissant sous l'effet de l'humidité constitués par des prépolymères contenant des groupes isocyanate présentant des teneurs en isocyanate de 2 à 20% en poids à base de polyisocyanates aliphatiques et de polypropylène-polyétherpolyols pouvant être obtenus via des catalyseurs bimétalliques présentant des poids moléculaires jusqu'à 25 000, ainsi que le cas échéant des solvants, des charges, des colorants et des adjuvants de rhéologie, **caractérisés en ce qu'**on utilise comme catalyseur du bis(diméthylaminoéthyl)éther.

2. Adhésifs et matériaux d'étanchéité selon la revendication 1, **caractérisés en ce que** le catalyseur est utilisé en une quantité de 0,02 à 3,0% en poids, par rapport au prépolymère.

3. Adhésifs et matériaux d'étanchéité selon la revendication 1, **caractérisés en ce que** le catalyseur est utilisé en une quantité de 0,5 à 1,5% en poids, par rapport au prépolymère.

4. Adhésifs et matériaux d'étanchéité selon les revendications 1 à 3, **caractérisés en ce que** la teneur en groupes isocyanate est de 3 à 17% en poids.

5. Adhésifs et matériaux d'étanchéité selon les revendications 1 à 4, **caractérisés en ce qu'**on utilise comme polyisocyanate aliphatique de l'hexaméthylènediisocyanate en tant que diisocyanate monomère et/ou sous forme de ses dérivés.

6. Adhésifs et matériaux d'étanchéité selon les revendications 1 à 4, **caractérisés en ce que** de l'isophoronediisocyanate est utilisé en tant qu'isocyanate et/ou sous forme de ses dérivés.

7. Adhésifs et matériaux d'étanchéité selon les revendications 1 à 6, **caractérisés en ce qu'**ils présentent une teneur en diisocyanates monomères inférieure à 1,0% en poids.

8. Utilisation des adhésifs et matériaux d'étanchéité selon les revendications 1 à 7 en tant que systèmes thermofusibles réactifs à base de polyuréthane applicables à chaud, acquérant une résistance lors du refroidissement et réagissant ensuite avec l'humidité.

9. Substrats collés ou étanchéifiés avec des adhésifs et des matériaux d'étanchéité selon les revendications 1 à 7.
